# EUROPEAN PATENT APPLICATION

(11) **EP 1 918 723 A2**
(43) Date of publication of application: **07.05.2008**
(21) Application number: 07119630.7
(22) Date of filing: 30.10.2007
(51) Int. Cl.: G01P 15/18, G01C 19/56

(54) **Dual mode mems sensor**

(30) Priority: 31.10.2006 US 554867
(71) Applicant: Honeywell International Inc., Morristown, NJ 07962 (US)
(72) Inventor: Platt, William P., Forest Lake, MN 55025 (US); Henrickson, Jens, St. Paul, MN 55105 (US)
(74) Representative: Buckley, Guy Julian

(57) **Abstract**

A system and method for determining acceleration along a motor axis of a MEMS gyroscope includes a processor. The processor includes a notch filter to remove a sinusoid from an instantaneous voltage from a motor pick up of the MEMS gyroscope. A memory bus allows random access to data stored in a processor readable memory. A processor-readable memory in operative engagement with the memory bus allows access to the processor-readable memory containing data. The data includes a model relating at least one instantaneous voltage in a remaining instantaneous voltage to an acceleration of a proof mass along the motor axis. Instructions to the processor include a routine to compare the at least one instantaneous voltage in the model to the remaining instantaneous voltage.

## Description

### BACKGROUND OF THE INVENTION

Typically, inertial navigation systems use angular rate gyroscopes to monitor an angular rate of rotation and linear accelerometers to monitor a linear rate of acceleration, so that an inertial navigation system includes six sensors: three gyroscopes and three linear accelerometers, one for each reference axis.

Improvements to this basic configuration have been made. U.S. Patent No. 5,313,835 to Dunn titled "Integrated Monolithic Gyroscopes/Accelerometers With Logic Circuits" discloses an inertial navigation system including a multi-axis gyroscope, a single axis gyroscope, and a three axis accelerometer. However, the increased complexity of multi-axis sensors increases the size of the unit in spite of the fact the unit contains fewer sensors.

What is needed is a device that can monitor both angular rate and linear acceleration to reduce the number of sensors required for an inertial navigation system and hence the size and cost of the system.

### SUMMARY OF THE INVENTION

Preferred embodiments of the present invention meet all of the above needs in providing a system and method for determining acceleration along a motor axis of a MEMS gyroscope and includes a processor. The processor includes a notch filter to remove a sinusoid from an instantaneous voltage from a motor pick up of the MEMS gyroscope. A memory bus allows random access to data stored in a processor readable memory. A processor-readable memory in operative engagement with the memory bus allows access to the processor-readable memory containing data. The data includes a model relating at least one instantaneous voltage in a remaining instantaneous voltage to an acceleration of a proof mass along the motor axis. Instructions to the processor include a routine to compare the at least one instantaneous voltage in the model to the remaining instantaneous voltage.

### BRIEF DESCRIPTION OF THE DRAWINGS

The preferred and alternative embodiments of the present invention are described in detail below with reference to the following drawings:

FIG. 1 is a plan view of a microelectromechanical system (MEMS) gyroscope formed in accordance with an embodiment of the present invention;

FIG. 2 is a graphic model of the linear response of the MEMS gyroscope motor pick up to displacement of a proof mass;

FIG. 3 is a flow chart of a method for deriving an acceleration from the motor pick up; and

FIG. 4 is a block diagram of a system to derive acceleration from the motor pick up of a MEMS gyroscope.

### DETAILED DESCRIPTION OF THE PREFERRED EMBODIMENT

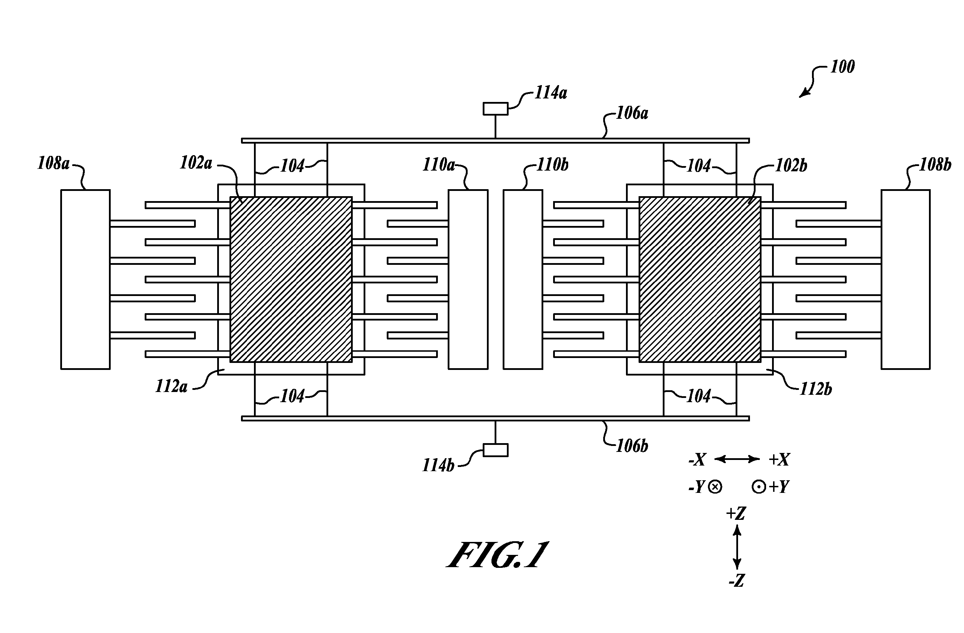

By way of overview, a system and method for determining acceleration along a motor axis of a MEMS gyroscope includes a processor. FIG. 1 is a plan view of a microelectromechanical system (MEMS) gyroscope 100 configured for dual mode operation according to an exemplary embodiment. Dual mode, in the embodiment, refers to the ability to sense both rotational acceleration about an axis and linear acceleration along a second orthogonal axis known as the "motor axis" of the gyroscope. While FIG. 1 shows the MEMS gyroscope 100 as a tuning fork gyroscope. The exemplary embodiment in FIG. 1 is not limiting in that MEMS gyroscopes that use the Coriolis acceleration to detect rotation, such as an angular rate sensing gyroscope, may be used. By way of non-limiting example, a substrate forms the MEMS gyroscope 100 and includes at least one proof mass 102a, 102b; a plurality of support beams 104; at least one cross beam 106a, 106b; at least one motor drive comb 108a, 108b; at least one motor pickoff comb 110a, 110b; at least one sense plate 112a, 112b; and at least one anchor 114a, 114b.

The at least one proof mass 102a, 102b may be any mass suitable formed in the course of microelectromechanical machining (micromachining) of the MEMS gyroscope 100. In one embodiment, the at least one proof mass 102a, 102b is a plate of silicon. Other materials that are compatible with micromachining techniques may also be employed. FIG. 1 shows two proof masses; however, one or more proof masses may be employed.

The at least one proof mass 102a, 102b is located substantially between the at least one motor drive comb 108a, 108b and the at least one motor pickoff comb 110a, 110b. The at least one proof mass 102a, 102b contains a plurality of comb-like electrodes extending towards both the at least one motor drive comb 108a, 108b and the at least one motor pickoff comb 110a, 111b. While the at least one proof mass 102a, 102b has ten electrodes as depicted in FIG. 1, the number of electrodes on the at least one proof mass 102a, 102b may be more or less than ten.

The at least one proof mass 102a, 102b is supported above the at least one sense plate 112a, 112b by the plurality of support beams 104. While eight support beams 104 are depicted in FIG. 1, the number of support beams used may be more or less than eight. The plurality of support beams 104 are micromachined from a silicon wafer. The plurality of support beams 104 act as springs allowing the at least one proof mass 102a, 102b to move within the drive plane (X-axis) and the sense plane (Y-axis). (See FIG. 1 for axis information.)

The plurality of support beams 104 may be connected to at least one cross beam 106a, 106b. The at least one cross beam 106a, 106b may be connected to at least one anchor 114a, 114b providing support for the MEMS gyroscope 100. The at least one anchor 114a, 114b is connected to the underlying substrate. While two anchors 114a, 114b are depicted in FIG. 1, the number of anchors may be more or less than two. The at least one anchor 114a, 114b is positioned along the at least one cross beam 106a, 106b in any manner that provides support to the MEMS gyroscope 100.

The at least one motor drive comb 108a, 108b may include a plurality of comb-like electrodes extending towards the at least one proof mass 102a, 102b. While the at least one motor drive comb 108a, 108b has four electrodes as depicted in FIG. 1, the number of electrodes on the at least one motor drive comb 108a, 108b may be more or less than four. The number of the electrodes on the at least one motor drive comb 108a, 108b may be determined by the number of electrodes on the at least one proof mass 102a, 102b.

The plurality of comb-like electrodes of the at least one proof mass 102a, 102b interdigitate with the electrodes that form the at least one motor drive comb 108a. When opposite charges are placed upon either of the electrodes of the at least one proof mass 102a, 102b or on the electrodes that form the at least one motor drive comb 108a 108b the resulting structure is that of at least one capacitor. Given the small scale of the MEMS gyroscope 100, the Coulomb forces between the plurality of comb-like electrodes of the at least one proof mass 102a, 102b interdigitated with the electrodes that form the at least one motor drive comb 108a dominate and allow the driving of the at least one proof mass 102a, 102b, when suitably charged.

Drive electronics (not shown in FIG. 1) suitably supply the charge to the at least one motor drive comb 108a, 108b at a drive oscillation frequency. By providing alternating charges to the at least one motor drive comb 108a, 108b at the drive oscillation frequency, the drive electronics cause the at least one proof mass 102a, 102b to oscillate in a manner to emulate a tuning fork vibrating at a natural or resonant frequency along the motor drive axis (X-axis) in response to the charging of the capacitors formed by the plurality of interdigitated comb-like electrodes of the at least one proof mass 102a, 102b and the at least one motor drive comb 108a, 108b.

The at least one motor pickoff comb 110a, 110b includes a plurality of comb-like electrodes extending towards the at least one proof mass 102a, 102b. While the at least one motor pickoff comb 110a, 110b has four electrodes as depicted in FIG. 1, the number of electrodes on the at least one motor pickoff comb 110a, 110b may be more or less than four. The number of the electrodes on the at least one motor pickoff comb 110a, 110b generally corresponds to the number of electrodes on the at least one proof mass 102a, 102b.

The plurality of interdigitated comb-like electrodes of the at least one proof mass 102a, 102b and the at least one motor pickoff comb 110a, 110b form capacitors in a manner similar to the at least one proof mass 102a, 102b and the electrodes that form the at least one motor drive comb 108a 108b, as described above. Interaction of charges on comb-like electrodes of the at least one proof mass 102a, 102b and the at least one motor pickoff comb 110a, 110b allow the MEMS gyroscope 100 to sense motion in the drive plane (X-axis).

Charge placed upon the at least one motor drive comb 108a, 108b excites the at least one proof mass 102a, 102b using electrostatic forces. Charge is placed by applying a voltage to the at least one motor drive comb 108a, 108b relative to that of the at least one proof mass 102a, 102b. The at least one motor pickoff comb 110a, 110b monitors the excitation or oscillation of the at least one proof mass 102a, 102b by monitoring current signals on electrodes on the at least one motor pickoff comb 110a, 110b. The at least one motor pickoff comb 110a, 110b experiences a current responsive to the electrostatic forces applied by the physical movement of at least one proof mass 102a, 102b into and out of proximity to the at least one motor pickoff comb 110a, 110b.

In normal operation of the MEMS gyroscope 100, the at least one motor pickoff comb 110a, 110b provides a sinusoidal signal to a processor (not shown in FIG. 1) which determines an operating frequency of the MEMS gyroscope 100 to indicate a departure in the vibration of the at least one proof mass 102a, 102b from the resonant frequency. If the at least one proof mass 102a, 102b begins to oscillate too fast or too slow to match the resonant frequency, the processor (not shown in FIG. 1) suitably signals the drive electronics (not shown in FIG. 1), and in response, the drive electronics (not shown in FIG. 1) may trim the drive oscillation frequency such that the at least one proof mass 102a, 102b vibrate again at the resonant frequency. An alternative to the processor to adjust the drive waveform, a closed loop control is typically employed.

Acceleration along the X-axis (shown in FIG. 1) will place an additional bias in the sinusoidal voltage the at least one motor pickoff comb 110a, 110b provides to the processor (not shown). The additional bias is related to linear acceleration along the X-axis and is therefore, useful as a measure of that acceleration. By subtracting the sinusoidal voltage at the resonant frequency from the signal provided the processor from the at least one motor pickoff comb 110a, 110b, the remaining signal provides the processor with a voltage indicative of linear acceleration along the X-axis.

A MEMS gyroscope 100 using the motor bias signal to detect linear acceleration can be designed to sense acceleration along any one of the x-, y-, or z-axes. The disclosure is not limited to the current configuration as similar indicia will be present for acceleration along the selected axis.

Referring to the remainder of the MEMS gyroscope 100, at least one sense plate 112a, 112b forms a sensing capacitor with the at least one proof mass 102a, 102b. If an angular rate is applied to the MEMS gyroscope 100 about the input plane (Z-axis) while the at least one proof mass 102a, 102b is oscillating along the drive plane (X-axis), a Coriolis force may be detected in the sense plane (Y-axis). The sensing capacitor at the at least one sense plate 112a, 112b provides a voltage used to sense motion in the sense plane (Y-axis). The output of the MEMS gyroscope 100 includes a signal proportional to the change in capacitance. The at least one sense plate 112a, 112b is suitably connected to sense electronics (not shown in FIG. 1). The sense electronics receives the signal indicative of the change in capacitance as the at least one proof mass 102a, 102b moves either towards or away from the at least one sense plate 112a, 112b.

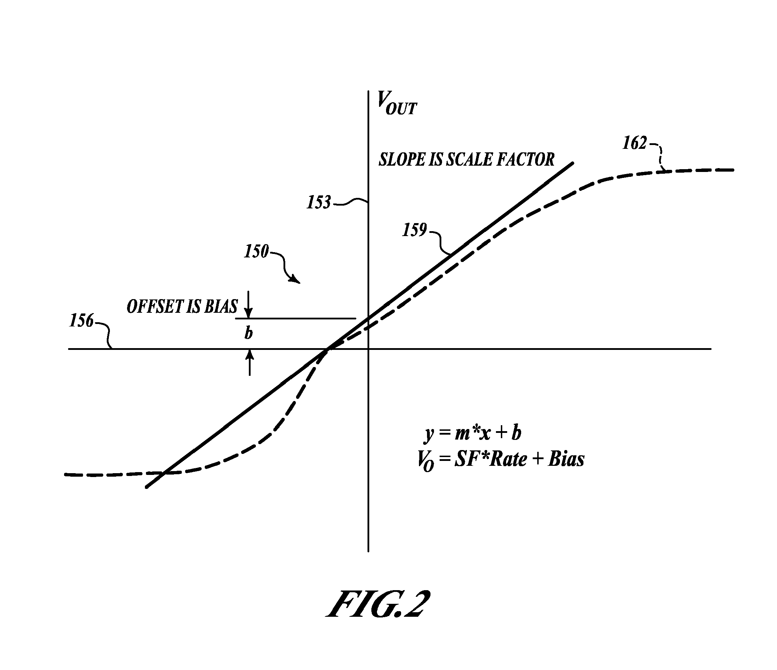

As discussed above, by subtracting the sinusoidal voltage, resulting from the driven movement of the at least one proof mass 102a, 102b, at the resonant frequency from the signal provided the processor from the at least one motor pickoff comb 110a, 110b, the remaining signal provides the processor with a voltage indicative of linear acceleration along the X-axis. Referring to FIG. 2, a model 150 of the MEMS gyroscope 100 (FIG. 1) shows the relationship of voltage Vₒᵤₜ indicative of linear acceleration plotted on the vertical axis 153, the voltage being present at the at least one motor pickoff comb 110a, 110b (FIG. 1), as a function of displacement of the at least one proof mass 102a, 102b (FIG. 1) along the X-axis (FIG. 1) plotted on the horizontal axis 156. Scale factor is based upon extrapolation of the actual function 162 into a linear relationship. The linear relationship is expressed as a line 159 having a slope *m* commonly referred to as a scale factor and an offset *b* commonly known as the bias. Empirical study will reveal a relationship for each MEMS gyroscope 100 or a generic model may be optionally adopted.

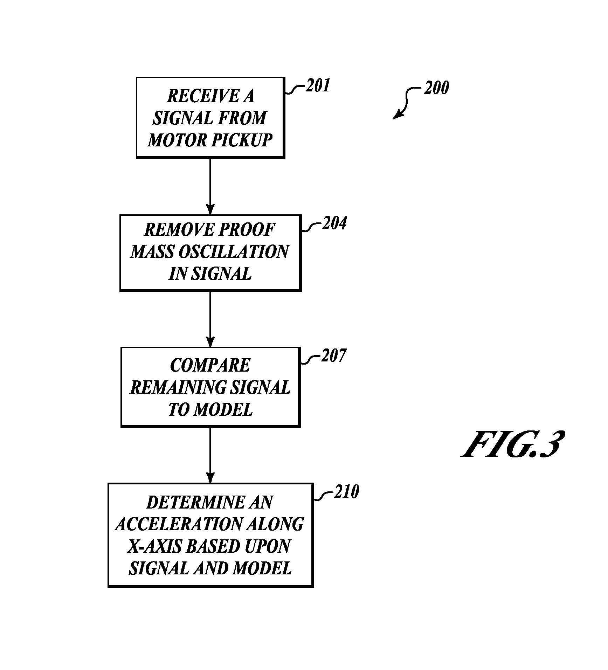

Referring to FIG. 3, a method 200 for resolving an axial acceleration of a MEMS gyroscope based upon a sensed voltage at a motor pick off begins at a block 201 where a signal is received at a processor from a motor pick off.

At a block 204, the signal is processed to remove the sinusoidal voltage associated with the driven movement of at least one proof mass. Movement of the proof mass at a resonant frequency is necessary to measure the Coriolis forces on the proof mass. The regular recurrent movement of the proof mass is sensed at the motor pick off and the signal received from the motor pick off includes voltages indicative of that regular recurrent movement. Because the movement of the at least one proof mass evidences itself as a single sinusoid of an approximately known frequency and magnitude, a notch filter of a configuration selected to suppress the resonant frequency, may be employed to remove the sinusoid from the received signal. In another embodiment, digital signal processing will remove the sinusoid with less phase shift than an analog filter. Fourier analysis will also work to isolate and to remove the sinusoid. Because a driven frequency of the mass in the motor axis is selected to exceed the frequency of movements of the MEMS gyroscope in the axis orthogonal to the motor axis, the relationship of the sinusoid to acceleration-induced voltages makes it technically easy to isolate. The processor removes the sinusoid from the signal at the block 204.

At a block 207, the remaining signal is compared with the model 162 (FIG. 2). Comparison with the voltage sensed at the motor pick off enables determination of a displacement of the proof mass along the X-axis (FIG. 1). In turn, displacement is related to acceleration in a manner allowing a ready transform between displacement and acceleration. Comparison to the model allows, in one embodiment, direct retrieval of a value indicative of acceleration.

At a block 210, based upon the model and the sensed voltage, a value is retrieved indicative of acceleration. The value of the sensed voltage is used to establish a value for displacement of the proof mass and the corresponding value for acceleration along the X-axis (FIG. 1) necessary to so displace the proof mass.

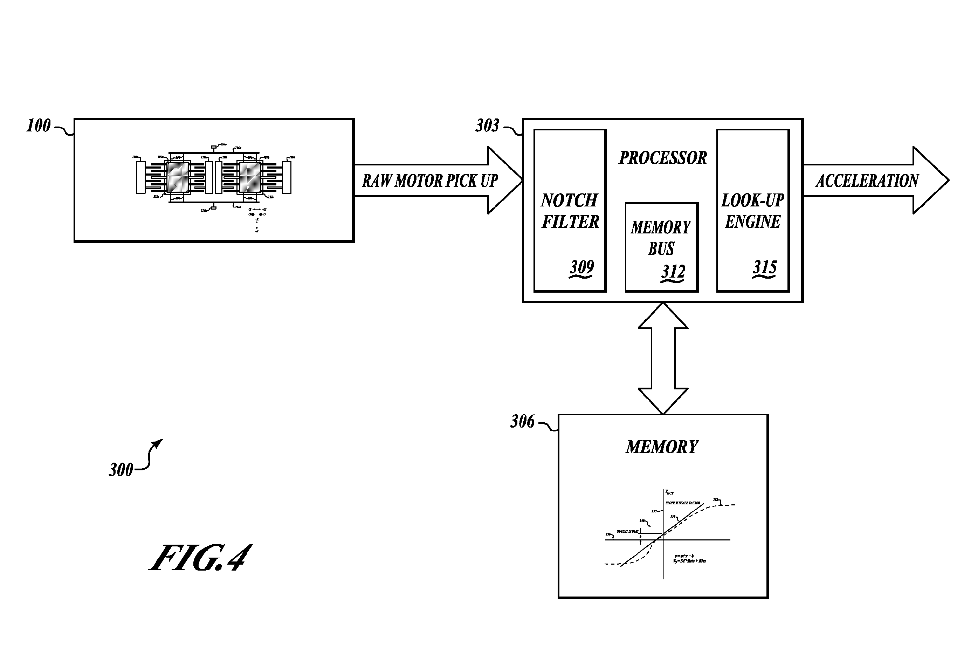

Referring to FIG. 4, a system to resolve voltage sensed at a motor pick off of a MEMS gyroscope includes the MEMS gyroscope 100, a processor 303, and a processor-readable memory 306. On the processor-readable memory 306 reside instructions to the processor to facilitate the resolution of the voltage sensed at the motor pick off into a linear acceleration along an X-axis relative to the MEMS gyroscope 100. Because the sensation of the acceleration along the X-axis does not interfere with the simultaneous sensing of rotational acceleration, the MEMS gyroscope 100 is exploited as a dual mode sensor.

The processor 303 may be, optionally, a single processor or a processor assembly. In an embodiment, the processor 303 is the same processor used to resolve angular acceleration based upon a distinct voltage sensed at the sense plate 112a, 112b (FIG. 1).

In operation, the MEMS gyroscope 100 provides the motor pick off signal to the processor 303. When a signal exists at the input of the processor, the processor begins signal processing according to the instructions stored on the processor-readable memory 306. In an analog embodiment, the processor 303 includes a notch filter 309 for removing the signal indicative of a resonant frequency movement of a proof mass within the MEMS gyroscope 100. Because the resonant frequency movement of the MEMS gyroscope 100 is a function of dimensions of the MEMS gyroscope 100, the processor 303 is readily selected to suppress voltages generated by the resonant frequency movement.

The processor 303, upon execution of instructions stored in the processor-readable memory 306, in turn, the notch filter 309 removes the sinusoid. The notch filter may be configured to derive the sinusoidal components in the signal from the motor pick off and to suitably suppress the sinusoid closest to a natural or resonant frequency of oscillation of the proof mass. The notch filter 309 generates a remaining signal.

The processor 303 also includes a memory bus 312 for operative engagement between the processor 303 and the processor-readable memory 306. The memory bus 312 retrieves data stored on the processor-readable memory 306 according to the operation of the processor 303.

The remaining signal is compared to a numerical model stored on the processor-readable memory 306 in order to determine a value for the displacement corresponding with instantaneous voltage values in the remaining signal. A look-up engine 315 facilitates comparison between the model stored in the processor-readable memory 315 and the remaining signal as the remaining signal exits the notch filter. Upon resolution, a further relationship between displacement and acceleration (also stored on processor-readable memory) may optionally be resolved to render a linear acceleration.

Although this non-limiting example of the embodiment is set forth, given the one-to-one correspondence between displacement and acceleration and the one-to-one correspondence between instantaneous voltage and displacement, in an embodiment, the voltage may be directly related to the acceleration and stored in a look up table in the processor-readable memory 306. In such an embodiment, upon removing the sinusoid representing the resonant frequency translational displacement of the proof mass along the X-axis (FIG. 1), the instantaneous voltage values generate, within the processor for output, a value indicative of linear acceleration along the X-axis.

While a MEMS tuning fork gyroscope is employed to illustrate the invention, the present invention also applies to other MEMS gyroscopes that use the Coriolis acceleration to detect rotation, such as an angular rate sensing gyroscope.

The embodiments of the invention in which an exclusive property or privilege is claimed are defined as follows:

## Claims

1. A system for determining acceleration along a motor axis of a MEMS gyroscope comprising:
a processor having:
a notch filter to remove a sinusoid from an instantaneous voltage from a motor pick up of the MEMS gyroscope;
a memory bus for random access to data stored in a processor-readable memory; and
a processor-readable memory in operative engagement with the memory bus, the processor-readable memory containing data including:
a model relating at least one instantaneous voltage in a remaining instantaneous voltage to an acceleration of a proof mass along the motor axis; and
instructions to the processor including:
a routine to instruct the processor to compare the at least one instantaneous voltage in the model to the remaining instantaneous voltage.

2. The system of Claim 1, wherein the notch filter includes one of a passive element filter, a dynamic element filter, or a Fourier transform component.

3. The system of Claim 1, wherein the processor includes a look-up engine.

4. The system of Claim 1, wherein the model includes a transform relating remaining instant voltage to displacement of a proof mass.

5. A method for determining an acceleration along the motor axis of a MEMS gyroscope comprises:
receiving a motor pick off instantaneous voltage;
filtering a proof mass oscillation from the instantaneous voltage to generate a remaining signal;
comparing the remaining signal to a model relating instantaneous voltage to displacement of a proof mass along the motor axis; and
deriving an acceleration based upon the displacement of the proof mass.

6. The method of Claim 5, wherein the filtering includes:
passing the motor pick off instantaneous voltage though a notch filter.

7. The method of Claim 6, wherein the notch filter is a passive element filter.

8. The method of Claim 6, wherein the notch filter is a dynamic element filter.

9. The method of Claim 5, wherein filtering includes digital signal processing and the digital signal processing includes a Fourier transform.

10. The method of Claim 5, wherein the comparing of a remaining signal includes activating a look-up engine.
